# EUROPÄISCHE PATENTSCHRIFT

(11) **EP 2 871 109 B1**
(45) Veröffentlichungstag und Bekanntmachung des Hinweises auf die Patenterteilung: **28.08.2019**
(21) Anmeldenummer: 14192046.2
(22) Anmeldetag: 06.11.2014
(51) Int. Cl.: B61D 17/04

(54) **Schienenfahrzeug mit Anhebestellen**
Rail vehicle with lifting points
Véhicule sur rail équipé de parties de levage

(30) Priorität: 07.11.2013 DE 102013222612
(43) Veröffentlichungstag der Anmeldung: 13.05.2015
(73) Patentinhaber: Bombardier Transportation GmbH, 10785 Berlin (DE)
(72) Erfinder: Burkhardt, Robert, 02625 Bautzen (DE); Hentschel, Harald, 01920 Haselbachtal (DE)
(74) Vertreter: Patentanwälte Bressel und Partner mbB

(56) Entgegenhaltungen:
- DE-A1- 2 004 416
- DE-C1- 4 405 279
- DE-U1-202005 012 197
- US-A- 4 223 612

## Beschreibung

Die Erfindung betrifft ein Schienenfahrzeug mit Anhebestellen nach dem Oberbegriff des Anspruchs 1. Derartige Anhebestellen sind zum Einsetzen von Anhebewerkzeugen zur Anhebung des Schienenfahrzeuges in der Werkstatt zur Reparatur, Wartung und Instandhaltung oder zur Bergung des Fahrzeuges nach Unfällen erforderlich.

Zur Anhebung eines Schienenfahrzeuges in der Werkstatt oder zur Fahrzeugbergung befinden sich am Wagenkastenrohbau Anhebestellen, zum Teil in Form seitlicher Öffnungen, zum An- bzw. Einsetzen des Anhebewerkzeuges. Dabei werden sogenannte Einsteckbolzen oder Anhebepratzen des Anhebewerkzeuges von jeder Seite mit den Anhebestellen des Wagenkastens in eine Wirkverbindung gebracht und können so Vertikallasten aufnehmen. Diese Anhebestellen bzw. Öffnungen für die Aufnahme der Einsteckbolzen des Anhebewerkzeuges sind dabei bei bekannten Schienenfahrzeugen starr mit dem Wagenkastenrohbau verbunden. Das bedeutet, dass der Wagenkasten sich über den beim Anheben entstehenden Verwindeweg verformt, um die Höhendifferenz auszugleichen.

In Strukturberechnungen bzw. bei Festigkeitstests muss der Nachweis erbracht werden, dass die Wagenkastenstruktur dieser hohen Torsionsbeanspruchung standhält oder dass die Konstruktion verbessert werden muss. Dies erfolgt bislang überwiegend durch Einschweißen von zusätzlichen Teilen zur Verstärkung der Wagenkastenstruktur.

Das eigentliche Anheben erfolgt dann mittels elektrischer oder hydraulischer Antriebsvorrichtungen. Derartige Anhebevorrichtungen werden im Stand der Technik vielfach beschrieben. Dazu werden beispielsweise die DD 267020 A1, DE 4405279 C1, DE 20007595 U1 und DE 202004016666 U1 genannt.

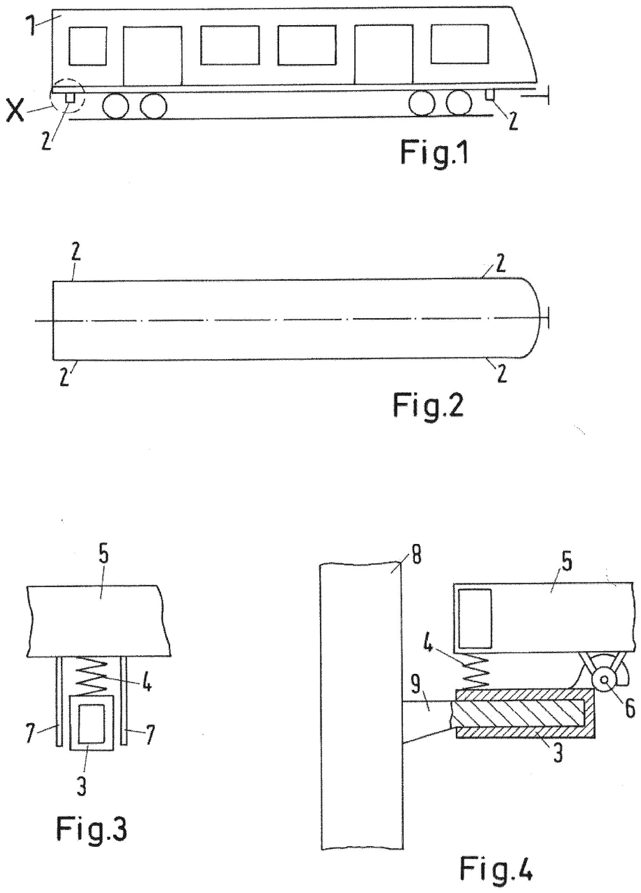

Aus der DE 20 04 416 A1 ist ein Schienenfahrzeug mit Drehgestellen, insbesondere eine Lokomotive mit einer Anhebevorrichtung, bekannt. Aus der Fig. 1 wird deutlich, dass die Seile eines Anhebegeschirrs an Anhebepratzen greifen, die an den Drehgestellen angeordnet sind.

Auf die Ausführung der an den Wagenkästen der Schienenfahrzeuge angeordneten Anhebestellen wird dabei nicht näher eingegangen. Aus den Ausführungen und den zugehörigen Zeichnungen geht aber hervor, dass es sich dabei um starre, mit dem Wagenkasten verbundene Stellen handelt. Die mit einem Einsteckbolzen versehenen Anhebvorrichtungen werden dabei durch Einschieben in am Wagenkasten vorgesehene, durch Öffnungen gebildete Hebeaufnahmepunkte montiert.

Die an den jeweiligen starren Anhebstellen positionierten Anhebewerkzeuge sind dabei untereinander so gekoppelt, um einen Gleichlauf zu gewährleisten. Dieser Gleichlauf ist toleranzbehaftet. Durch die sogenannte Gleichlauftoleranz werden unterschiedliche Anhebehöhen an jeder Hebestelle des Fahrzeuges erreicht. Daraus resultiert eine Verwindungsbelastung auf den einzelnen Wagenkasten bzw. auf mehrere gekoppelte Wagenkästen eines Fahrzeuges. Dabei darf ein definierter Verwindeweg nicht überschritten werden, damit die Wagenkastenstruktur beim Anheben keine unzulässigen Strukturschäden erfährt. Je höher dabei die Höhendifferenz (Verwindeweg) der Anhebewerkzeuge ist, desto größer sind die Beanspruchungen (Torsionslasten) auf den Wagenkasten bzw. die Wagenkästen des Schienenfahrzeuges.

Die Aufgabe der Erfindung besteht deshalb darin, eine Anhebstelle zu entwickeln, die die Torsionsbelastung auf den Wagenkasten des Schienenfahrzeuges bei großen Verwindwegen so reduziert, dass beim Anheben des Fahrzeuges unzulässige Strukturschäden vermieden werden.

Gemäß der Erfindung wird eine elastische Lagerung der Anhebestellen vorgeschlagen. Vorteilhaft wird dadurch die Höhendifferenz (Verwindeweg) auf alle Hebepunkte verteilt, wobei der Höhenausgleich definiert an den Lagerungen der Anhebestellen erfolgt. Dadurch wird vermieden, dass die Torsionsbeanspruchung auf die Wagenkastenstruktur des Schienenfahrzeuges übertragen wird und der Wagenkasten diese ertragen muss.

Die Anhebestellen sind dabei an mindestens vier Punkten eines statisch bestimmten Schienenfahrzeuges angeordnet. Bei mehrgliedrigen Fahrzeugen, so genannten Gelenkfahrzeugen, befinden sich an den übrigen Wagenteilen weitere Anhebstellen entsprechend der statischen Bestimmtheit, sodass die Erfindung sowohl für Schienenfahrzeuge mit einem als auch für mehrere Wagenteile einsetzbar ist.

Die elastisch gelagerte Anhebestelle besteht dabei aus einer Aufnahme für den Einsteckbolzen eines Anhebewerkzeuges. Bei den Ausführungen nach dem bekannten Stand der Technik ist die Aufnahme starr mit dem Wagenkastenrohbau verbunden. Gemäß der vorliegenden Erfindung ist die Aufnahme über wenigstens eine Feder (federnde Einrichtung) mit dem Wagenkasten verbunden. Als Feder können sämtliche bekannten Federarten eingesetzt werden, wobei vorzugsweise Tellerfedern oder Gummimetallfedern Anwendung finden sollen. Vorteilhaft stützt sich das Schienenfahrzeug beim Anheben des Schienenfahrzeuges über die Federn und die Aufnahme auf die Anhebewerkzeuge ab. Die Feder wird unter Krafteinwirkung auf Druck beansprucht und verformt sich entsprechend der Belastung.

Weiter ist vorteilhaft ein Drehlager als Drehmomentstütze vorgesehen. Das Drehlager ist eine Schnittstelle zwischen Wagenkasten und Aufnahme. Die Aufnahme ist daher durch Feder und Drehlager mit dem Wagenkasten verbunden. Das Drehlager hat dabei die Aufgabe das Drehmoment, welches durch den Einsteckbolzen beim Anheben auf die Aufnahme wirkt, abzustützen, ohne dabei das Drehmoment auf den Wagenkasten zu übertragen. Auf den Lagerbock, der am Wagenkasten angeordnet ist, wirkt hauptsächlich eine vertikale Zugkraft. Das Drehlager ist dabei vorzugsweise als Gleitlager ausgeführt.

Weiter sind Führungsstücke vorgesehen, welche vorteilhaft sicherstellen, dass die Federbewegung nur in vertikaler Richtung erfolgt. Über Markierungen an der Aufnahme und den Führungsstücken kann ein maximaler Verformungsweg festgelegt werden, welcher sich aus der zulässigen Beanspruchungsgrenze für den Wagenkasten ergibt. Somit wird sichergestellt, dass der Wagenkasten beim Anheben durch defekte Anhebewerkzeuge nicht überlastet wird.

Die Erfindung wird nachfolgend anhand eines Ausführungsbeispiels unter Bezugnahme auf die Zeichnungen näher erläutert. Es zeigen:
- Fig. 1:: eine schematische Darstellung einer Seitenansicht eines Schienenfahrzeuges mit Anhebestellen,
- Fig. 2:: eine schematische Darstellung einer Draufsicht eines Schienenfahrzeuges mit einer Positionsanzeige der Anhebestellen,
- Fig. 3:: das Detail "X" aus Fig. 1,
- Fig. 4:: eine schematische Darstellung eines angedeuteten Anhebewerkzeuges in Wirkverbindung mit einer Anhebestelle eines Schienenfahrzeuges.

In Fig. 1 ist eine Seitenansicht eines Schienenfahrzeuges 1 dargestellt Zur Anhebung des Schienefahrzeuges in der Werkstatt oder im Betrieb nach einer Entgleisung befinden sich am Wagenkasten seitliche, elastisch gelagerte Anhebestellen 2. Die Anhebestellen 2 sind dabei an mindestens vier Punkten des statisch bestimmten Schienenfahrzeuges 1 angeordnet. Bei mehrgliedrigen Fahrzeugen, so genannten Gelenkfahrzeugen, befinden sich an den übrigen Wagenteilen (nicht dargestellt) weitere Anhebstellen entsprechend der statischen Bestimmtheit, sodass die Erfindung sowohl für Schienenfahrzeuge mit einem als auch für mehrere Wagenteile einsetzbar ist.

In Fig. 2 ist eine Draufsicht auf ein Schienenfahrzeug 1 nach Fig. 1 dargestellt.

In Fig. 3 ist die Anhebestelle 2 im Detail (Detail "X" aus Fig. 1) in einer Seitenansicht dargestellt. Mit dem Bezugszeichen 5 wird der Wagenkasten 5 des Schienenfahrzeuges 1 bezeichnet. Die Anhebestelle 2 besteht aus einer Aufnahme 3 für den Einsteckbolzen eines Anhebewerkzeuges (nicht dargestellt) und ist über eine Feder 4 am Wagenkasten 5 elastisch gelagert. Als Feder 4 können sämtliche bekannten Federarten eingesetzt werden, wobei vorzugsweise Tellerfedern oder Gummimetallfedern verwendet werden. Die ebenfalls am Wagenkaste 5 angeordneten Führungsstücke 7 stellen sicher, dass die Federbewegung nur in vertikaler Richtung erfolgt.

Weiter ist ein Drehlager 6 vorgesehen, welches als Drehmomentstütze wirkt. Das Drehlager 6 ist in Fig. 3 nicht erkennbar, wird aber in Fig. 4 gezeigt. Das Drehlager 6 ist eine Schnittstelle zwischen Wagenkasten 5 und Aufnahme 3. Die Aufnahme 3 ist daher durch die Feder 4 und das Drehlager 6 mit dem Wagenkasten 5 verbunden. Das Drehlager 6 hat dabei die Aufgabe, das Drehmoment, welches durch den Einsteckbolzen beim Anheben auf die Aufnahme wirkt, abzustützen, ohne dabei das Drehmoment auf den Wagenkasten zu übertragen. Auf den Lagerbock, der am Wagenkasten angeordnet ist, wirkt hauptsächlich eine vertikale Zugkraft.

Das Drehlager 6 ist vorzugsweise als Gleitlager ausgeführt.

In Fig. 4 ist außerdem das Anhebewerkzeug 8 mit dem Einsteckbolzen 9 zumindest andeutungsweise dargestellt. Beim Anheben des Schienenfahrzeuges 1 stützt sich das Schienenfahrzeug 1 über die Federn 4 und die Aufnahmen 3 auf die Anhebewerkzeuge 8 ab. Die Federn 4 werden dabei unter Krafteinwirkung auf Druck beansprucht und verformten sich entsprechend der Belastung. Die Drehlager 6 dienen dabei, wie bereits beschrieben, als Drehmomentstütze.

An der Aufnahme 3 und den Führungsstücken 7 können Markierungen vorgesehen sein, über welche ein maximaler Verformungsweg festgelegt werden kann, welcher sich aus der zulässigen Beanspruchungsgrenze für den Wagenkasten ergibt. Somit wird sichergestellt, dass der Wagenkasten beim Anheben durch defekte Anhebewerkzeuge nicht überlastet wird.

## Patentansprüche

1. Schienenfahrzeug mit einem oder mehreren Wagenteilen, wobei die Wagenteile jeweils einen Wagenkasten mit an den seitlichen Längsseiten der Wagenteile vorgesehenen Anhebestellen zum Eingriff von Anhebewerkzeugen umfassen, wobei die Anhebestellen (2) am Wagenkasten (5) elastisch gelagert sind, wobei
- die Anhebestellen (2) jeweils eine Aufnahme (3) zur Wirkverbindung mit einem Einsteckbolzen des Anhebewerkzeuges umfassen, wobei die Aufnahme (3) über wenigstens eine federnde Einrichtung (4) mit dem Wagenkasten (5) verbunden ist,
- als Schnittstelle zwischen Wagenkasten (5) und Aufnahme (3) ein Drehlager (6) vorgesehen ist, wobei die Aufnahme (3) durch die federnde Einrichtung (4) und das Drehlager (6) mit dem Wagenkasten (5) verbunden ist.

2. Schienenfahrzeug nach Anspruch 1, **dadurch gekennzeichnet, dass** die Anhebestellen (2) an mindestens vier Punkten des Schienenfahrzeuges (1) angeordnet sind.

3. Schienenfahrzeug nach den Ansprüchen 1 und 2, **dadurch gekennzeichnet, dass** als federnde Einrichtung (4) sämtliche bekannten Federarten einsetzbar sind, wobei vorzugsweise Tellerfedern oder Gummimetallfedern angeordnet werden.

4. Schienenfahrzeug nach den Ansprüchen 1 bis 3, **dadurch gekennzeichnet, dass** das Drehlager (6) vorzugsweise als Gleitlager ausgebildet ist.

5. Schienenfahrzeug nach einem der Ansprüche 1 bis 4, **dadurch gekennzeichnet, dass** die Aufnahme (3) in Führungsstücken (7) geführt wird, wobei die Aufnahme (3) und die Führungsstücke (7) Markierungen zur Anzeige des Verformungsweges während des Anhebevorgangs aufweisen.

## Claims

1. A rail vehicle comprising one or more car sections, the car sections each including a car body comprising lifting points provided on the lateral longitudinal sides of the car sections for the engagement of lifting tools, the lifting points (2) being elastically mounted on the car body (5), wherein
- each of the lifting points (2) includes a receptacle (3) for the operative connection to an insertion pin of the lifting tool, the receptacle (3) being connected to the car body (5) via at least one spring-loaded device (4); and
- a pivot bearing is provided as an interface between the car body (5) and the receptacle (3), the receptacle (3) being connected to the car body (5) by the spring-loaded device (4) and the pivot bearing (6).

2. The rail vehicle according to claim 1, **characterized in that** the lifting points (2) are provided in at least four locations of the rail vehicle (1).

3. The rail vehicle according to claims 1 and 2, **characterized in that** all known spring types can be used as the spring-loaded device (4), preferably disk springs or rubber-metal springs being arranged.

4. The rail vehicle according to any one of claims 1 to 3, **characterized in that** the pivot bearing (6) is designed as a sliding bearing.

5. The rail vehicle according to any one of claims 1 to 4, **characterized in that** the receptacle (3) is guided in guide pieces (7), the receptacle (3) and the guide pieces (7) including markings to display the deformation path during the lifting process.

## Revendications

1. Véhicule sur rail avec une ou plusieurs voitures, dans lequel les voitures comprennent respectivement une caisse avec des parties de levage prévues au niveau des côtés longitudinaux latéraux des voitures pour la mise en prise d'outils de levage, dans lequel les parties de levage (2) sont logées de manière élastique au niveau de la caisse (5), dans lequel
- les parties de levage (2) comprennent respectivement un logement (3) pour la liaison active avec un boulon enfichable de l'outil de levage, dans lequel le logement (3) est relié à la caisse (5) par le biais d'au moins un dispositif élastique (4),
- un palier rotatif (6) est prévu en tant qu'interface entre la caisse (5) et le logement (3), dans lequel le logement (3) est relié à la caisse (5) par le dispositif élastique (4) et le palier rotatif (6).

2. Véhicule sur rail selon la revendication 1, **caractérisé en ce que** les parties de levage (2) sont disposées au niveau d'au moins quatre points du véhicule sur rail (1).

3. Véhicule sur rail selon les revendications 1 et 2, **caractérisé en ce que** tous les types de ressort connus peuvent être utilisés en tant que dispositif élastique (4), dans lequel de préférence des rondelles-ressort ou ressorts caoutchouc métal sont disposés.

4. Véhicule sur rail selon les revendications 1 à 3, **caractérisé en ce que** le palier rotatif (6) est réalisé de préférence en tant que palier lisse.

5. Véhicule sur rail selon l'une quelconque des revendications 1 à 4, **caractérisé en ce que** le logement (3) est guidé dans des pièces de guidage (7), dans lequel le logement (3) et les pièces de guidage (7) présentent des marquages pour l'affichage de la déformation pendant l'opération de levage.
